# EUROPÄISCHE PATENTSCHRIFT

(11) **EP 0 752 692 B1**
(45) Veröffentlichungstag und Bekanntmachung des Hinweises auf die Patenterteilung: **16.08.2000**
(21) Anmeldenummer: 96250137.5
(22) Anmeldetag: 25.06.1996
(51) Int. Cl.: G09B 29/10, G08G 1/0967, G01C 21/20

(54) **Verfahren und System zur Aktualisierung von digitalen Strassenkarten**
Method and system for updating digital road maps
Procédé et système de mise à jour de cartes digitales routières

(30) Priorität: 03.07.1995 DE 19525291
(43) Veröffentlichungstag der Anmeldung: 08.01.1997
(73) Patentinhaber: MANNESMANN Aktiengesellschaft, 40213 Düsseldorf (DE)
(72) Erfinder: Heiman, Josef, Dipl.-Ing., 40629 Düsseldorf (DE); Hort, Christian, Dipl.-Ing., 40589 Düsseldorf (DE); Weber, Thomas, Dipl.-Inform., 58097 Hagen (DE)
(74) Vertreter: Meissner, Peter E., Dipl.-Ing.

(56) Entgegenhaltungen:
- EP-A- 0 384 794
- WO-A-92/02891
- DE-C- 4 105 584
- US-A- 4 843 569
- US-A- 4 891 761
- US-A- 5 170 164

## Beschreibung

Die Erfindung betrifft ein Verfahren zur Aktualisierung von digitalen Straßenkarten, die insbesondere bei der Verkehrslenkung und Zielführung von Fahrzeugen Verwendung finden, bei dem durch mindestens ein dafür vorgesehenes Probefahrzeug aktuelle Fahrtroutendaten ermittelt, gespeichert und an einen Verkehrsrechner übertragen werden und der Verkehrsrechner die in den Fahrtroutendaten enthaltenen Informationen auswertet und als Attribute den entsprechenden Straßenabschnitten einer digitalen Straßenkarte zuordnet.

Die WO92/02891 offenbart ein Verfahren zum Generieren einer digitalen Straßenkarte durch Aufzeichnen des Weges eines durch ein Straßenverkehrsnetz fahrenden, ein GPS-System aufweisenden Fahrzeuges, wobei auch Attribute befahrener Straßen, wie Schlaglöcher, Feuerhydranten etc., über eine Tastatur eingebbar sind.

Aus "ISATA - 26th International Symposium on Automotive Technology and Automation", Aachen, 13.-17.9.1993, ist ein interaktives, dynamisches Routenführungs-System (Projekt "EURO-SCOUT") bekannt, bei dem speziell ausgerüstete Fahrzeuge mit einem Verkehrsrechner (Leitrechner) korrespondieren. Die zweiseitige Kommunikation erfolgt dabei über mit einer Infrarot-Sende-/ Empfangseinrichtung ausgerüstete Baken, die an allen wichtigen Knotenpunkten des Straßennetzes aufgestellt sind. Die ebenfalls mit einer Sende-/ Empfangseinrichtung ausgerüsteten Fahrzeuge erhalten über die Baken vom Verkehrsrechner u.a. aktuelle Informationen über die kürzesten Fahrtrouten zu einem gewünschten Zielpunkt. Die Hauptinformationsquelle des Verkehrsrechners sind im Verkehrsstrom sich mitbewegende, "mitschwimmende" Probefahrzeuge. Diese übermitteln dem Verkehrsrechner insbesondere ihre Fahrzeiten zwischen wichtigen Verkehrsknotenpunkten sowie Wartezeiten an Lichtsignalanlagen. Diese Informationen werden vom Verkehrsrechner anschließend zur Routenführung und Verkehrslenkung genutzt, indem beispielsweise entsprechende Verkehrsleitinformationen an die zu führenden Fahrzeuge übertragen und über ein Steuergerät auf einem Display (z.B. aus DE-A 4039887 bekannt) im Fahrzeug ausgegeben werden.

Wichtig ist bei diesem System, daß der Verkehrsrechner für eine erfolgreiche Routenführung bereits über eine aktuelle Straßenkarte verfügen muß. Dazu gehört die Kenntnis bestimmter Eigenschaften der einzelnen Straßenabschnitte des Straßennetzes, die im folgenden als Attribute bezeichnet werden und insbesondere die Richtungsbefahrbarkeit (Einbahnstraßen), zulässige Fahrzeughöhe oder -breite oder-gewicht und ähnliche Informationen umfassen können und vielfach in Form von entsprechenden Verkehrsschildern angezeigt werden. Die Aktualisierung der Straßenkarte erfolgt üblicherweise dadurch, daß vorher Informationen bei entsprechenden staatlichen oder städtischen Institutionen eingeholt oder die Straßenabschnitte von speziellen Fahrzeugen regelmäßig abgefahren und Veränderungen auf der Straßenkarte vermerkt werden. Das regelmäßige Abfahren des Straßennetzes stellt aber besonders in großen Städten einen erheblichen personellen und wirtschaftlichen Aufwand dar, wobei vorher in der Regel alle Sachverhalte erfaßt werden müssen, die anschließend vom Bedienpersonal des Fahrzeugs während des Abfahrens der Straßen des Straßennetzes überprüft werden sollen. Trotzdem treten immer wieder Abweichungen zwischen den Eintragungen in der digitalen Straßenkarte und der realen Situation im Straßennetz hinsichtlich der Befahrbarkeit von Straßenabschnitten und zulässigen Richtungsänderungen an Kreuzungen und Einmündungen auf, da im Regelfall nicht alle Straßen des Straßennetzes an einem Tag überprüft werden können, aber z.B. durch Bauarbeiten Straßensperrungen erfolgt sein können. Hinzu kommt, daß das eingesetzte Personal auch bei entsprechenden fachlichen Voraussetzungen nicht immer fehlerfrei arbeitet. Fehlerhafte Zielführungen, bedingt durch eine fehlerhafte Straßenkarte, müssen aber bei einer automatisierten, rechnergesteuerten Zielführung, Routenplanung und Verkehrslenkung mit sehr hoher Sicherheit ausgeschlossen werden können. Dieses Qualitätskriterium hat folglich eine deutlich höhere Priorität als beispielsweise die Zielführung entlang der kürzesten Fahrtroute. Ein geringfügig längerer Weg ist eher zu tolerieren als ein erzwungenes Wendemanöver wegen Nichtbefahrbarkeit eines Straßenabschnitts.
Aufgabe der vorliegenden Erfindung ist die Schaffung eines Verfahrens, das durch insbesondere die Erfassung der Zulässigkeit des Befahrens der Straßenabschnitte in eine bestimmte Richtung eine ständige Aktualisierung der zur Verkehrslenkung und Zielführung von Fahrzeugen eingesetzten digitalen Straßenkarte gestattet, so daß vor allem eine sehr sichere Zielführung und Verkehrslenkung möglich ist. Die Aktualisierung der digitalen Straßenkarte soll darüber hinaus mit relativ geringem wirtschaftlichen Aufwand erzielbar sein.

Die Erfindung erreicht die Lösung des Problems hinsichtlich des Verfahrens durch die im kennzeichnenden Teil des Patentanspruchs 1 angegebenen Merkmale. Durch die kennzeichnenden Merkmale der Unteransprüche ist dieses Verfahren in vorteilhafter Weise weiter ausgestaltbar.

Die Erfindung sieht vor, daß als Fahrtroutendaten automatisch in Abständen mindestens die aktuelle geographische Position mindestens eines Probefahrzeugs fortlaufend bestimmt wird und die Attribute der entsprechenden Straßenabschnitte der Straßenkarte anhand der Fahrtroutendaten, die die durch das Probefahrzeug zurückgelegte Fahrtroute umfaßt, aktualisiert werden. Dabei sollen die Attribute mindestens die Zulässigkeit des Befahrens der Straßenabschnitte in mindestens einer Richtung beinhalten.

Hierdurch wird erreicht, daß immer sehr viele, wenn nicht sogar alle die Straßenabschnitte bekannt sind, die aktuell mit Sicherheit befahren werden können. Außerdem sind damit auch die aktuell erlaubten Richtungsänderungen an sehr vielen Straßenkreuzungen und Einmündungen des Straßennetzes bekannt. Die Verkehrslenkung und Zielführung von Fahrzeugen erfolgt zweckmäßigerweise so, daß die automatische, rechnergesteuerte Zielführung und Verkehrslenkung nur über mit Sicherheit befahrbare Strecken des Straßennetzes erfolgt, d.h. über solche Straßenabschnitte, deren Befahrbarkeit sich aufgrund entsprechender Fahrtroutendaten aus jüngster Zeit bestätigt hat.

Die Attribute in der Weise werden aktualisiert, daß anhand der Fahrtrouten, die von den Fahrtroutendaten beschrieben werden, ein Vergleich mit den zugeordneten Attributen der digitalen Straßenkarte derart durchgeführt wird, daß die Straßenabschnitte auf ihre Zulässigkeit hinsichtlich des Befahrens der Straßenabschnitte in mindestens einer Richtung überprüft werden, womit man gleichzeitig eine Überprüfung hinsichtlich der zulässigen Richtungsänderungen an Straßenkreuzungen oder Einmündungen erhält. Die zugeordneten entsprechenden Attribute werden auf "zulässig" gesetzt, wenn eine vorgebbare Mindestzahl an Probefahrzeugen in einem vorgebbaren ersten Zeitintervall den entsprechenden Straßenabschnitt in der entsprechenden Richtung befahren hat, was beispielsweise an einer Kreuzung oder Einmündung die Zulässigkeit einer entsprechenden Richtungsänderung bedeutet. Bei diesem Verfahren der Aktualisierung werden außerdem die zugeordneten Attribute zweckmäßigerweise auf "unzulässig" gesetzt, wenn über ein vorgebbares zweites Zeitintervall kein Probefahrzeug den entsprechenden Straßenabschnitte in der entsprechenden Richtung befahren hat. Bei einer entsprechend großen Anzahl an eingesetzten Probefahrzeugen steht dem Verkehrsrechner folglich nach den Aktualisierungen mittels des erfindungsgemäßen Verfahrens automatisch eine hochaktuelle digitale Straßenkarte zur Verfügung. Vorteilhafterweise kommen als Probefahrzeuge beispielsweise die Fahrzeuge einer größeren organisatorischen Einheit, beispielsweise eines Taxiunternehmens, zum Einsatz. Selbstverständlich müssen die Probefahrzeuge nicht unbedingt einer organisatorischen Einheit angehören. Denkbar ist etwa auch, daß man einen Großteil der neu zugelassenen Fahrzeuge nach Abstimmung mit den Eigentümern mit einem entsprechenden Gerät zur laufenden automatischen Erfassung der aktuellen geographischen Position und zur anonymisierten Übermittlung dieser Positionsdaten an den Verkehrsrechner ausstattet.

Zur Erhöhung der Sicherheit bei der Aktualisierung der digitalen Straßenkarte wird vorgeschlagen, daß die Fahrtroutendaten auch die an den Straßenabschnitten, Kreuzungen und Einmündungen angeordneten Verkehrsschilder umfassen.

Dabei ist es von Vorteil, wenn die Verkehrsschilder optoelektronisch z.B. mittels einer Videokamera erfaßt, anschließend EDV-technisch identifiziert, zusammen mit den ermittelten Ortspositionen der Fahrtroute gespeichert und als Fahrtroutendaten in Abständen an den Verkehrsrechner übertragen werden.

Nur ein sehr geringer infrastruktureller Aufwand ist erforderlich, wenn die Fahrtroutendaten an den Verkehrsrechner mittels eines Funktelefons übertragen werden. Dies kann beispielsweise selbsttätig in den Nachtstunden geschehen, um das Funknetz damit nicht in den üblichen Verkehrszeiten zu belasten.

Ein vorgesehenes System zur Durchführung des erfindungsgemäßen Verfahrens zur Aktualisierung von digitalen Straßenkarten, die insbesondere bei der Verkehrslenkung und Zielführung Verwendung finden, weist mindestens ein Probefahrzeug auf, wobei jedes Probefahrzeug über folgende Einrichtungen verfügt: eine Fahrtroutendatenermittlungseinrichtung zur Ermittlung von aktuellen Fahrtroutendaten, die mindestens den durch das Probefahrzeug in einem Intervall zurückgelegten Weg beschreiben, eine installierte Speichereinheit zur Speicherung der ermittelten Fahrtroutendaten, eine Datenübertragungseinrichtung zur Übertragung von Fahrtroutendaten an einen Verkehrsrechner und einen Datenbus, über den die Ortspositionsermittlungseinrichtung, der Speicher und die Datenübertragungseinrichtung datentechnisch miteinander verbunden sind. Weiterer Bestandteil ist ein Verkehrsrechner, der mindestens eine Datenempfangseinrichtung und eine digitale Straßenkarte umfaßt, wobei mindestens einzelnen Straßenabschnitten der digitalen Straßenkarte Attribute zugeordnet sind, die mindestens die Zulässigkeit des Befahrens der Straßenabschnitte in mindestens einer Richtung und die damit mindestens die zulässigen Richtungsänderungen an Kreuzungen und Einmündungen kennzeichnen. Der Verkehrsrechner ist mit einer Vorrichtung versehen zur Aktualisierung der den Straßenabschnitten der digitalen Straßenkarte zugeordneten Attribute, wobei die Aktualisierung anhand der von den Probefahrzeugen übermittelten Fahrtroutendaten erfolgt.

Um die zu übertragende Datenmenge auf ein Mindestmaß zu reduzieren und damit die Übertragungskanäle zu entlasten, ist in den Probefahrzeugen vorteilhafterweise eine Vorrichtung zur Datenreduzierung der Fahrtroutendaten vorgesehen, die gespeicherte Ortspositionsdaten, die einen ersten Vektorzug bestimmen, der den durch das Probefahrzeug in einem Intervall zurückgelegten Weg beschreibt, derart reduziert, daß die reduzierten Ortspositionsdaten einen zweiten Vektorzug bestimmen und der maximale senkrechte Abstand der Vektoren des zweiten Vektorzugs von dem ersten Vektorzug kleiner als ein vorgegebener Schwellenwert ist. Diese Datenmengenreduzierung erfolgt im Probefahrzeug z.B. mittels eines dafür vorgesehenen Mikrorechners. Ein derartiges Datenreduzierverfahren ist aus der nicht vorveröffentlichten Patentanmeldung DE 195 08 486 bekannt.

Zweckmäßigerweise erfolgt die Erfassung der an den Straßenabschnitten, Kreuzungen und Einmündungen angeordneten Verkehrsschilder durch eine im Probefahrzeug installierte Videokamera. Die Identifizierung der Verkehrszeichen kann ebenfalls durch den im Probefahrzeug vorgesehenen Mikrorechner erfolgen.

Um den relativ teuren Verkehrsrechner vom Aktualisierungsaufwand der Straßenkarte zu entlasten, wird vorgeschlagen, daß die Vorrichtung zur Aktualisierung der zugeordneten Attribute eine separate Prozessoreinheit aufweist.

Mit geringem infrastrukturellem Aufwand läßt sich die Datenübertragung realisieren, wenn die Datenübertragungseinrichtung und die Datenempfangseinrichtung als Sende- bzw. Empfangseinheit eines Funktelefons ausgebildet sind.

Es ist zweckmäßig, die Aktualisierung der den Straßenabschnitten, Kreuzungen und Einmündungen der digitalen Straßenkarte zugeordneten Attribute durch die Aktualisierungsvorrichtung entsprechend einem Verfahren nach einem der Ansprüche 1 bis 5 durchführen zu lassen.

Ein System zur Aktualisierung von digitalen Straßenkarten verfügt über eine Vielzahl von Probefahrzeugen 11 einer Probefahrzeugflotte 10, die keine organisatorische Einheit sein muß. Die Probefahrzeugflotte 10 kann aber eine organisatorische Einheit sein, also beispielsweise die Fahrzeuge eines größeren Taxiunternehmens umfassen, die sich regelmäßig in einem bestimmten Straßennetz bewegen. Zur Aktualisierung von digitalen Straßenkarten, die nur bestimmte Fahrzeuge (Spezialfahrzeuge z.B. für Gefahrguttranporte) oder Fahrzeugklassen betreffen, umfaßt die organisatorische Einheit nur Fahrzeuge der entsprechenden Art oder des entsprechenden Einsatzzwecks. Es kann sich bei den obengenannten Probefahrzeugen 11 aber auch um ein einzelnes Fahrzeug handeln. Dabei verfügt jedes Probefahrzeug 11 mindestens über folgende Einrichtungen: eine Fahrtroutendatenermittlungseinrichtung, eine Speichereinheit, eine Datenübertragungseinrichtung und einen Datenbus, über den die Fahrtroutendatenermittlungseinrichtung, der Speicher und die Datenübertragungseinrichtung datentechnisch miteinander verbunden sind. Zusätzlich können die Probefahrzeuge 11 selbstverständlich auch über eine eigene digitale Straßenkarte verfügen.

Die Fahrtroutendatenermittlungseinrichtung ermöglicht die Bestimmung der aktuellen Ortsposition des Probefahrzeugs 11, wobei die Fahrtroutendaten auch noch andere Daten außer den Ortspositionen des Probefahrzeugs 11 enthalten können, z.B. die entlang der Fahrtroute angeordneten Verkehrszeichen; sie enthält aber mindestens eine Ortspositionsermittlungseinrichtung, z.B. einen Empfänger eines Navigations-Satellitensystems (z.B. GPS). Über den Datenbus ist die Fahrtroutendatenermittlungseinrichtung mit der Speichereinheit datentechnisch verbunden. Die Speichereinheit des Probefahrzeugs 11 ermöglicht das fortgesetzte Ablegen der aktuell ermittelten Ortsposition, wobei die Ortspositionen zusammen den in einem Intervall vom Probefahrzeug 11 zurückgelegten Weg (analog einer "Perlenkette") beschreiben. Der räumliche Abstand der Ortspositionen muß dabei nicht notwendig konstant sein. Der räumliche Abstand kann sich z.B. nach dem zeitlichen Abstand der Ermittlung der aktuellen Ortspositionen richten, wobei der zeitliche Abstand der Ortspositionsermittlung vorgebbar ist; in diesem Fall wäre der räumliche Abstand nicht konstant. Dabei kann es sich insbesondere um einen geschwindigkeitsabhängigen Vorgabewert handeln. Bei Unterschreiten einer Mindestgeschwindigkeit ist es zweckmäßigerweise vorgesehen, daß der Abstand der Ortspositionsermittlungen in Abhängigkeit vom zurückgelegten Weg erfolgt, also beispielsweise in konstantem räumlichen Abstand.

Die Datenübertragungseinrichtung verfügt über eine Sendeeinheit, durch die die Verbindung zu einem außerhalb des Probefahrzeugs 11 fest angeordneten Verkehrsrechner 20 herstellbar ist und die erfaßten und im Bedarfsfall aufbereiteten Fahrtroutendaten an den Verkehrsrechner 20 übertragbar sind.

Der Verkehrsrechner 20 umfaßt mindestens eine Datenempfangseinrichtung 21 und eine in einem Datenspeicher abgelegte digitale Straßenkarte 22, wobei mindestens einzelnen Straßenabschnitten der digitalen Straßenkarte Attribute zugeordnet sind (beispielsweise in Form von in der digitalen Straßenkarte 22 in den entsprechenden Datensätzen abgespeicherten Zustandsvektoren oder Attributen), wobei die Attribute mindestens die Zulässigkeit des Befahrens der Straßenabschnitte in mindestens einer Richtung und die mindestens die zulässigen Richtungsänderungen an Kreuzungen und Einmündungen enthalten. Das ist dadurch realisiert, daß den einzelnen Richtungen eines Straßenabschnitts jeweils ein Zustandsvektor zugeordnet ist, der in den aktuellen Zustand "zulässig" oder "unzulässig" setzbar ist.

Der Verkehrsrechner 20 ist mit einer Aktualisierungsvorrichtung 23 versehen, die die Aktualisierung der den Straßenabschnitten der digitalen Straßenkarte zugeordneten Attribute ermöglicht, wobei die Aktualisierung mit Hilfe einer Vergleichseinrichtung anhand der von den Probefahrzeugen 11 übermittelten Fahrtroutendaten erfolgt. Die Aktualisierungsvorrichtung 23 hat Zugriff auf die Zustandsvektoren der digitalen Straßenkarte 22 und kann die Zustände der Zustandsvektoren auf "zulässig" oder "unzulässig" setzen. Selbstverständlich kann die Aktualisierung der Zustandsvektoren auch manuell durchgeführt werden. Insbesondere ist es möglich, die als "unzulässig" ermittelten Fahrtrichtungen auszuwerten und als Ausgangspunkt für gezielte Überprüfungen der entsprechenden Straßenabschnitte heranzuziehen.

Um die zu übertragende Datenmenge möglichst weitgehend und ohne wesentliche Informationsverluste zu reduzieren, ist in den Probefahrzeugen 11 in Weiterbildung der Erfindung eine Vorrichtung zur Datenreduzierung vorgesehen, die die gespeicherten Ortspositionsdaten, die einen ersten Vektorzug bestimmen, der den durch das Probefahrzeug 11 in einem Intervall zurückgelegten Weg beschreibt, reduziert. Die Datenreduzierung erfolgt so, daß die reduzierten Ortspositionsdaten einen zweiten Vektorzug bestimmen, wobei der maximale senkrechte Abstand der Vektoren des zweiten Vektorzugs von dem ersten Vektorzug kleiner als ein vorgegebener Schwellenwert ist. Diese Datenmengenreduzierung erfolgt im Probefahrzeug 11 z.B. mittels eines dafür vorgesehenen Mikrorechners und eines dafür vorgesehenen Rechenprogramms.

Zusätzlich kann eine Videokamera zur Erfassung der an den Straßenabschnitten, Kreuzungen und Einmündungen angeordneten Verkehrsschilder in den Probefahrzeugen 11 jeweils installiert sein. Die Zuordnung der Verkehrszeichen durch Auswertung der aufgenommenen Bilder der Videokamera kann ebenfalls durch den vorgesehenen Mikrorechner erfolgen.

Die Aktualisierungsvorrichtung 23 ist zur Entlastung des teuren Verkehrsrechners 20 vom Aktualisierungsaufwand der Straßenkarte 22 zur Aktualisierung der den Straßenabschnitten der digitalen Straßenkarte 22 zugeordneten Attribute vorzugsweise mit einer separaten Prozessoreinheit versehen.

Zur Datenübertragung vom Probefahrzeug 11 zum Verkehrsrechner 20 ist die Datenübertragungseinrichtung und die Datenempfangseinrichtung 21 beispielsweise als Sende- bzw. Empfangseinheit eines Funktelefons ausgebildet sind. Es sind aber auch andere Datenübertragungseinrichtungen denkbar.

Beim Einsatz des Systems zur Aktualisierung von digitalen Straßenkarten bewegen sich vorzugsweise eine Vielzahl von Probefahrzeugen auf den Straßen innerhalb eines vorgegebenen Straßennetzes. Die individuellen Fahrwege der einzelnen Probefahrzeuge können dabei zufällig sein, insbesondere wenn es sich um die Fahrzeuge eines größeren Taxiunternehmens handelt, die mit den entsprechenden Geräten der Probefahrzeuge ausgestattet sind. Während der Fahrt ermitteln die Fahrtroutendatenermittlungseinrichtungen in Abständen die jeweils aktuellen Ortspositionen; diese werden unmittelbar nach der Ermittlung oder zwischenverarbeitet an die mitgeführte Speichereinrichtung übergeben und in einem Speicher abgelegt. Zusätzlich werden durch die Videokamera die an den Straßen aufgestellten Verkehrsschilder optoelektronisch erfaßt, rechentechnisch identifiziert und als Teil der Fahrtrouteninformationen im Speicher abgelegt. Bei einer alternativen Ausgestaltung werden alle Verkehrszeichen mit Kleinstsendern versehen, die eine entspechende Kennung aussenden, welche z.B. die Identifikationsnummer des Verkehrszeichens enthält, wobei die Identifikationsnummern ebenfalls als Teil der Fahrtrouteninformationen im Speicher abgelegt werden. Nach Beendigung der Fahrt werden die Fahrtroutendaten mittels eines Funktelefons in anonymisierter Form selbsttätig an den Verkehrsrechner 20 übermittelt.

Der Verkehrsrechner 20 sammelt die übertragenen Fahrtroutendaten in einem speziell dafür vorgesehenen Speicherbereich. Zu einem geeigneten Zeitpunkt, beispielweise nachts, werden die Fahrtroutendaten aufbereitet, d.h. die entsprechenden Fahrtrouten werden bestimmt und in eine Folge von Straßenabschnitten der digitalen Straßenkarte 22 umgewandelt. Da die z.B. durch den GPS-Empfänger ermittelten Ortspositionen eine gewisse Ortsungenauigkeit aufweisen, gehört zur Aufbereitung der Fahrtroutendaten z.B. ein sogenanntes Map-Matching, d.h. die "unscharfen" Fahrtrouten werden unter Berücksichtigung der möglichen Fehlertoleranz in die Straßenkarte 22 eingepaßt und den entsprechenden Straßenabschnitten der digitalen Straßenkarte 22 zugeordnet. Die Zuordnung kann aber auch nach einer DGPS-Korrektur mindestens einiger Ortspositionen, die dann hinreichend genau zur Verfügung stehen, mit oder ohne anschließendem Map-Matching erfolgen. Danach überprüft die Aktualisierungsvorrichtung die den Straßenabschnitten der digitalen Straßenkarte zugeordneten Attribute anhand der aufbereiteten Fahrtroutendaten, also auch unter Berücksichtigung der ermittelten Verkehrszeichen. Als zu berücksichtigende Verkehrszeichen kommen z.B. "Linksabbiegen verboten", "Einbahnstraße" usw. in Frage. Wenn eine vorgegebene Zahl von Probefahrzeugen 11 einen bestimmten Straßenabschnitt innerhalb einer vorgegebenen Zeitspanne, also z.B. innerhalb der letzten zwei Tage, in einer der möglichen Richtungen befahren hat, wird der Zustandsvektor der entsprechenden Richtung des entsprechenden Straßenabschnitts auf "zulässig" gesetzt.

Dabei registriert die Aktualisierungsvorrichtung alle Straßenabschnitte beispielsweise für ein frei vorgebbares Gebiet, die innerhalb einer vorangegangenen Zeitspanne, also z.B. innerhalb der letzten zehn Tage, aktualisiert worden sind. Um fehlerhafte Zielführungen und Verkehrslenkungen auszuschließen, werden zweckmäßigerweise alle die Straßenabschnitte, die innerhalb der letzten zehn Tage nicht aktualisiert worden sind, auf "unzulässig" gesetzt. Bei einer genügend großen Anzahl von Probefahrzeugen 11 ist mit dieser Methode eine sichere Aktualisierung erzielbar, die darüber hinaus vollautomatisch ausführbar ist. Da auch die während einer gewissen längeren Zeitspanne nicht befahrenen Straßenabschnitte durch Setzen des Zustandsvektors auf "unzulässig" berücksichtigt werden, erfolgt keine Zielführung und Verkehrslenkung über diese Bereiche des Straßennetzes, damit sind fehlerhafte Zielführungen und Verkehrslenkungen nahezu ausgeschlossen, zumindest aber sehr stark reduziert.

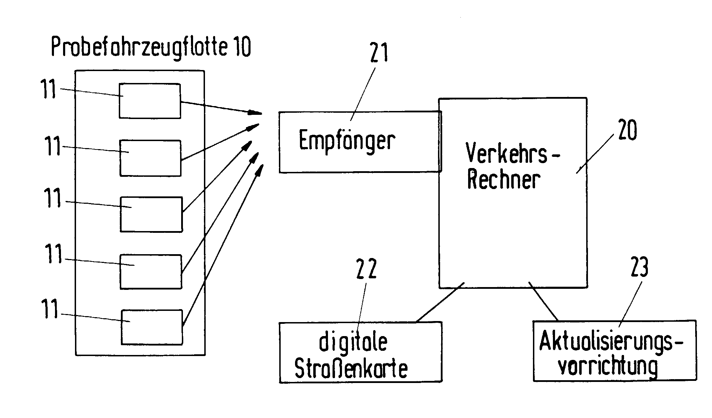

## Patentansprüche

1. Verfahren zur Aktualisierung von digitalen Straßenkarten, die insbesondere bei der Verkehrslenkung und Zielführung von Fahrzeugen Verwendung finden, bei dem durch mindestens ein dafür vorgesehenes Probefahrzeug aktuelle Fahrtroutendaten ermittelt, gespeichert und an einen Verkehrsrechner übertragen werden und der Verkehrsrechner die in den Fahrtroutendaten enthaltenen Informationen auswertet und als Attribute den entsprechenden Straßenabschnitten einer digitalen Straßenkarte zuordnet,
wobei als Fahrtroutendaten automatisch mindestens die aktuelle geographische Position des Probefahrzeugs fortlaufend bestimmt und die Attribute der entsprechenden Straßenabschnitte der Straßenkarte anhand der Fahrtroutendaten aktualisiert werden, wobei die Attribute mindestens die Zulässigkeit des Befahrens der Straßenabschnitte in mindestens einer Richtung umfassen,
**dadurch gekennzeichnet,**
daß die zugeordneten Attribute in der Weise aktualisiert werden, daß anhand der Fahrtrouten der Probefahrzeuge das zugeordnete Attribut "Befahrbarkeit des Straßenabschnitts in einer bestimmten Richtung" auf "zulässig" gesetzt wird, wenn eine vorgebbare Mindestzahl an Probefahrzeugen in einem vorgebbaren Zeitintervall den entsprechenden Straßenabschnitt in der entsprechenden Richtung befahren hat oder an einer Kreuzung oder Einmündung eine entsprechende Richtungsänderung vorgenommen hat.

2. Verfahren nach Anspruch 1,
**dadurch gekennzeichnet,**
daß die Attribute in der Weise aktualisiert werden, daß das zugeordnete Attribut "Befahrbarkeit des Straßenabschnitts in einer bestimmten Richtung" auf "unzulässig" gesetzt wird, wenn über ein längeres vorgebbares Zeitintervall kein Probefahrzeug den entsprechenden Straßenabschnitte in der entsprechenden Richtung befahren oder an einer Kreuzung oder Einmündung eine entsprechende Richtungsänderung vorgenommen hat.

3. Verfahren nach einem der Ansprüche 1 bis 2,
**dadurch gekennzeichnet,**
daß die Fahrtroutendaten die an den Straßenabschnitten angeordneten Verkehrsschilder umfassen.

4. Verfahren nach einem der Ansprüche 1 bis 3,
**dadurch gekennzeichnet,**
daß die Verkehrsschilder optoelektronisch erfaßt, identifiziert und zusammen mit den ermittelten Ortspositionen der Fahrtroute gespeichert werden.

5. Verfahren nach einem der Ansprüche 1 bis 4,
**dadurch gekennzeichnet,**
daß die Fahrtroutendaten an den Verkehrsrechner mittels eines Funktelefons übertragen werden.

## Claims

1. A method of updating digital road maps, which are used in particular for traffic control and vehicle navigation, in which at least one sample vehicle provided for the purpose detects current journey route data, stores them and transmits them to a traffic computer and the traffic computer evaluates the information contained in the journey route data and assigns it as attributes to the appropriate road sections of a digital road map,
at least the current geographic position of the sample vehicle being automatically determined continuously as journey route data and the attributes of the corresponding road sections of the road map being updated by means of the journey route data, the attributes including at least the admissibility of travelling on the road sections in at least one direction,
characterised in that
the assigned attributes are updated in such a way that, with the aid of the journey routes of the sample vehicles, the assigned attribute "passability of the road section in a particular direction" is set at "admissible" if a predeterminable minimum number of sample vehicles have travelled on the corresponding road section over a predeterminable period in the appropriate direction or have effected an appropriate change of direction at a crossroads or junction.

2. A method according to claim 1,
characterised in that
the attributes are updated in such a way that the assigned attribute "passability of the road section in a particular direction" is set to "inadmissible" if no sample vehicle has travelled over the corresponding road sections in the appropriate direction for a relatively long predeterminable period or has effected an appropriate change of direction at a crossroads or junction.

3. A method according to one of claims 1 and 2,
characterised in that
the journey route data include the road signs arranged on the road sections.

4. A method according to one of claims 1 to 3,
characterised in that
the road signs are detected optoelectronically, identified and stored together with the determined locations on the journey route.

5. A method according to one of claims 1 to 4,
characterised in that
the journey route data are transmitted to the traffic computer by means of a radio telephone.

## Revendications

1. Procédé pour actualiser des cartes routières numériques qui sont utilisées, en particulier, pour l'aiguillage du trafic et le guidage vers une destination de véhicules, pour lequel par au moins un véhicule d'essai prévu à cet effet on détermine, stocke et transmet à un calculateur de trafic, des données d'itinéraire actuelles, et le calculateur de trafic évalue les informations contenues dans les données d'itinéraire et les associe, comme attributs, aux tronçons de route correspondants d'une carte routière numérique, au moins la position géographique actuelle du véhicule d'essai étant déterminée de façon continue et automatique comme données d'itinéraire et les attributs des tronçons de route correspondants de la carte routière étant actualisés à partir des données d'itinéraire, les attributs comprenant au moins l'autorisation de rouler sur des tronçons de route dans au moins un sens,
caractérisé en ce que les attributs associés sont actualisés de sorte que, à partir des itinéraires des véhicules d'essai, l'attribut « possibilité de rouler sur le tronçon de route dans un sens déterminé » est amené à « autorisé », lorsqu'un nombre minimal prédéfini de véhicules d'essai a, dans un intervalle de temps prédéfini, roulé sur le tronçon de route correspondant dans le sens correspondant ou réalisé à un croisement ou à un débouché une modification de sens correspondante.

2. Procédé selon la revendication 1,
caractérisé en ce que les attributs sont actualisés de sorte que l'attribut associé « possibilité de rouler sur le tronçon de route dans un sens déterminé » est amené à « non autorisé », lorsque pendant un intervalle de temps prédéfini plus long aucun véhicule d'essai n'a roulé sur les tronçons de route correspondants dans le sens correspondant ou n'a réalisé une modification de sens correspondante à un croisement ou un débouché.

3. Procédé selon une des revendications 1 à 2,
caractérisé en ce que les données d'itinéraire comprennent les panneaux de signalisation agencés sur les tronçons de route.

4. Procédé selon une des revendications 1 à 3,
caractérisé en ce que les panneaux de signalisation sont détectés de façon optoélectronique, sont identifiés et sont stockés conjointement avec les positions de localisation détectées de l'itinéraire.

5. Procédé selon une des revendications 1 à 4,
caractérisé en ce que les données d'itinéraire sont transmises au calculateur de trafic au moyen d'un radiotéléphone.
